# EUROPÄISCHE PATENTSCHRIFT

(11) **EP 2 906 446 B1**
(45) Veröffentlichungstag und Bekanntmachung des Hinweises auf die Patenterteilung: **25.07.2018**
(21) Anmeldenummer: 13773811.8
(22) Anmeldetag: 09.10.2013
(51) Int. Cl.: B60R 11/04

(54) **VORRICHTUNG ZUR AUFNAHME EINER KAMERA MIT LINEARFÜHRUNG**
DEVICE FOR RECEIVING A CAMERA WITH LINEAR GUIDE
DISPOSITIF SERVANT A RECERVOIR UNE CAMERA AVEC GUIDAGE LINEAIRE

(30) Priorität: 10.10.2012 DE 102012109609
(43) Veröffentlichungstag der Anmeldung: 19.08.2015
(73) Patentinhaber: Huf Hülsbeck & Fürst GmbH & Co. KG, 42551 Velbert (DE)
(72) Erfinder: SCHÜTZ, Heiko, 42549 Velbert (DE)
(74) Vertreter: Bals, Rüdiger
(86) Internationale Anmeldenummer: PCT/EP2013/071082
(87) Internationale Veröffentlichungsnummer: WO 2014/056995

(56) Entgegenhaltungen:
- EP-A2- 1 332 923
- WO-A1-2012/107547
- DE-A1-102006 023 103
- DE-A1-102007 052 402
- DE-A1-102009 008 281

## Beschreibung

Die Erfindung betrifft eine Vorrichtung zur Aufnahme einer Kamera mit den Merkmalen gemäß Anspruch 1, die insbesondere als Einparkhilfe eines Kraftfahrzeuges dienen kann. Die Vorrichtung umfasst ein Gehäuse, in dem die Kamera austauschbar aufgenommen werden kann, und ein Getriebe, welches dazu dient, die Kamera zwischen einer Ruheposition und einer Betriebsposition zu bewegen. Ferner umfasst die Erfindung auch ein Verfahren zur Betätigung einer Vorrichtung zur Aufnahme einer Kamera gemäß des Anspruches 15.

Vorrichtungen mit einer Kamera, die zur Bilderfassung des Außenbereiches eines Kraftfahrzeuges dienen, sind aus dem Stand der Technik bereits bekannt. Derartige Vorrichtungen umfassen ein Gehäuse, in dem die Kamera zwischen einer Ruheposition und einer Betriebsposition beweglich aufgenommen ist. Beispielsweise können derartige Kameras im Bereich des unterstützten Einparkens von Kraftfahrzeugen zum Einsatz kommen. Wird beispielsweise der Rückwärtsgang des Kraftfahrzeuges eingelegt, verfährt die Kamera von der Ruheposition in die Betriebsposition, wobei die Kamera wenigstens teilweise aus dem Gehäuse herausgefahren wird. Dadurch wird der Bereich hinter dem Kraftfahrzeug durch die Kamera bildlich erfasst und auf einem Display für den Fahrer des Kraftfahrzeuges angezeigt. Ist die Rückwärtsfahrt beendet und nimmt der Fahrer des Kraftfahrzeuges den Rückwärtsgang wieder heraus, kann die Kamera von der Betriebsposition wieder zurück in die Ruheposition verschwenken.

In der DE 10 2009 008 281 A1 ist eine Vorrichtung zur Aufnahme einer Kamera offenbart, die fest im vorhandenen Gehäuse installiert ist. Dabei hat sich als Nachteil herausgestellt, dass die Vorrichtung lediglich eine bestimmte Kamera aufnehmen kann, sodass die Wartung und der Austausch der Kamera nicht gewährleistet werden kann. Die Vorrichtung sieht ferner ein Deckelelement zum Schutz der Kamera und ein Getriebe vor, welches einen Verstellmechanismus für die Kamera und einen weiteren Verstellmechanismus für das Deckelelement umfasst. Der erste Verstellmechanismus bewegt die Kamera zwischen einer Ruheposition und einer Betriebsposition und der zweite Verstellmechanismus bewegt das Deckelelement zwischen einer Schließposition und einer Öffnungsposition. Dabei hat sich als Nachteil herausgestellt, dass das Deckelelement bei der Bewegung aus der Schließposition in die Öffnungsposition sehr nahe an der Fahrzeugkarosserie verfährt und der Zwischenraum sehr gering ist. Außerdem ist die Vorrichtung konstruktiv kompliziert, mit vielen Bauteilen aufgebaut und benötigt einen großen Bauraum. Auch aus der gattungsbildenden DE 10 2007 052 402 A1 und der DE 10 2006 023 103 A1 sind Vorrichtungen zur Aufnahme einer Kamera bekannt, die einen Verstellmechanismus aufweisen, wodurch ein Deckelelement zwischen einer Schließposition und einer Öffnungsposition bewegbar ist.

Der Erfindung liegt daher die objektive Aufgabe zugrunde, eine einfache, kostengünstige und kompakte Vorrichtung zur Aufnahme einer Kamera zu schaffen, welche die insbesondere zuvor genannten Nachteile überwindet. Insbesondere soll die Vorrichtung verschiedene Kameras aufnehmen können und eine Funktionsweise der Kamera ermöglichen ohne die Fahrzeugkarosserie zu beschädigen. Zudem soll die Vorrichtung einen einfachen Aufbau aufweisen und leicht zu montieren und zu betätigen sein.

Diese Aufgabe wird erfindungsgemäß durch eine Vorrichtung mit sämtlichen Merkmalen des unabhängigen Anspruches 1 gelöst. Ebenfalls wird zur Lösung der Aufgabe ein Verfahren zur Betätigung einer Vorrichtung zur Aufnahme einer Kamera mit den Merkmalen des Anspruchs 15 vorgeschlagen. In den abhängigen Vorrichtungs- und Verfahrensansprüchen sind bevorzugte Weiterbildungen der Erfindung aufgeführt. Merkmale, die zur erfindungsgemäßen Vorrichtung offenbart werden, gelten dabei auch für das erfindungsgemäße Betätigungsverfahren und umgekehrt. Außerdem kann das erfindungsgemäße Verfahren aus Anspruch 15 mit der erfindungsgemäßen Vorrichtung für eine Kamera realisiert werden.

Die Erfindung gemäß dem Hauptanspruch sieht einen Schlitten, an welchem die Kamera austauschbar befestigt werden kann, und ein Gehäuse vor, in welchem der Schlitten in einer ersten Führung zwischen einer Ruheposition, in welcher die Kamera inaktiv ist, und einer Betriebsposition, in welcher Bilder aktiv durch die Kamera erfassbar sind, bewegbar aufgenommen werden kann. In der Ruheposition des Schlittens kann die Kamera ausgeschaltet sein oder eingeschaltet bleiben, wobei jedoch üblicherweise keine Bilder erfasst werden sollen. Durch die Bewegung des Schlittens in die Betriebsposition kann die Kamera zur Bilderfassung innerhalb des Gehäuses in eine Bilderfassungsstellung verfahren oder gar aus dem Gehäuse herausgefahren werden. Ferner sieht die Erfindung ein Deckelelement vor, durch das eine Öffnung im Gehäuse abschließbar ist, durch die die Kamera nach außen gerichtet sein kann. Erfindungsgemäß kann das Deckelelement einerseits schwenkbar am Schlitten und andererseits in einer zweiten Führung im Gehäuse bewegbar gelagert sein. Dabei kann das Deckelelement zwischen einer Schließposition, in welcher das Deckelelement die Öffnung abdeckt, und einer Öffnungsposition, in welcher das Deckelelement die Öffnung freigibt, bewegt werden. Der Erfindungsgedanke liegt dabei darin, dass ein Getriebe den Schlitten durch einen externen Antrieb derart zwischen der Ruheposition und der Betriebsposition antreibt, dass das Deckelelement zwischen der Schließposition und der Öffnungsposition mindestens eine erste Bewegungsphase und eine zweite Bewegungsphase ausführt. Vorteilhafterweise benötigt das Deckelelement dabei keinen speziellen Verstellmechanismus und kann zum Teil durch die Einwirkung des Schlittens, welcher durch das Getriebe bewegt wird, und zum Teil durch die Einwirkung der zweiten Führung zwischen den gewünschten Positionen verfahren werden. Erfindungsgemäß ist es besonders vorteilhaft, dass das Deckelelement eine zweiphasige Bewegung ausführen kann. In der ersten Bewegungsphase kann das Deckelelement zunächst weg von einer Fahrzeugkarosserie, beispielhaft linear, bewegt werden. In der zweiten Bewegungsphase kann das Deckelelement derart verschwenkt werden, dass die Sicht nach außen für die Kamera frei wird. Hiermit kann sichergestellt werden, dass das Deckelelement sich zuerst von der Fahrzeugkarosserie entfernt bevor es in die Öffnungsposition verschwenkt, um die Fahrzeugkarosserie nicht zu beschädigen.

Vorteilhafterweise kann der Schlitten eine gehäuseseitige Montageöffnung aufweisen, um die Kamera austauschbar aufzunehmen. Durch die Montageöffnung kann die Kamera auf eine einfache Weise eingebaut und wieder entnommen werden. Erfindungsgemäß kann die Montageöffnung zur Aufnahme von unterschiedlichen Kameramodellen ausgebildet sein. Zudem kann der Schlitten mit einer nach außen zeigenden Aufnahmeöffnung ausgeführt sein, durch welche die Kamera nach außen gerichtet sein kann. Durch die Öffnung kann ein Objektiv der Kamera in der Betriebsposition des Schlittens den Außenbereich eines Fahrzeugs bildlich erfassen.

Erfindungsgemäß kann der Schlitten einen Adapter für die Kamera aufweisen. Mithin kann sichergestellt werden, dass verschiedene Kameramodelle in dem Schlitten aufgenommen werden können. Der Schlitten kann zudem derart ausgeformt sein, dass die Kamera im eingesetzten Zustand durch einen Form- und/oder Kraftschluss zuverlässig gehalten wird. Ferner kann der Schlitten Rast- und/oder Klemmelemente, insbesondere in der Montageöffnung, aufweisen, die mit komplementären Halteelementen der Kamera zusammenwirken können, sodass die Kamera sicher im Schlitten angeordnet wird. Beispielhaft kann die Kamera durch einen Bajonettverschluss im Schlitten gehalten werden.

Das erfindungsgemäße Getriebe kann ein Schwenkelement aufweisen. Das Getriebe kann dabei an einer Antriebsseite an einen externen Antrieb angeschlossen werden, um das Schwenkelement zu verschwenken. Dabei kann das Getriebe mit unterschiedlichen Antrieben zusammenwirken. Vorteilhafterweise benötigt das Getriebe lediglich ein Schwenkelement, um den Schlitten zwischen der Ruheposition und der Betriebsposition zu bewegen. Die erfindungsgemäße Vorrichtung erhält daher einen einfachen Aufbau und kann außerdem an verschiedenen Fahrzeugen leicht montiert werden. Es kann ferner vorgesehen sein, dass das Getriebe selbsthemmend aufgebaut ist.

Das zuvor erwähnte Schwenkelement des Getriebes kann an nur einer Seite des Schlittens angebracht werden. Vorteilhafterweise kann das Schwenkelement innerhalb des Gehäuses angeordnet werden. Somit kann die Vorrichtung, umfassend den Schlitten, das Getriebe und das Deckelelement sowie eine austauschbare Kamera, einen Baukasten bilden. Der Baukasten kann nach einem besonderen Vorteil modulweise am Fahrzeug ein- und ausgebaut sowie ausgetauscht werden. Außenseitig kann das Schwenkelement, beispielsweise über einen antriebsseitigen Nocken, der eine Antriebswelle des Getriebes darstellt, an einem Drehschaft des externen Antriebes angeordnet werden. Der Drehschaft bzw. der Nocken kann dabei durch eine korrespondierende Öffnung in einer Gehäusewand durchragen. Die Erstreckungsrichtung des Drehschaftes kann die Drehachse des Schwenkarmes definieren. Innenseitig kann das Schwenkelement, beispielhaft mit einem gehäuseseitigen Nocken, in eine Antriebsführung am Schlitten eingreifen, um den Schlitten in Bewegung zu setzen. Alternativ ist es denkbar, dass das Schwenkelement außerhalb des Gehäuses angeordnet werden kann, sodass die Vorrichtung, umfassend den Schlitten, das Deckelelement und eine austauschbare Kamera, einen Baukasten bilden kann. Dabei kann das Schwenkelement über eine entsprechende Ausnehmung im Gehäuse am Schlitten eingreifen, um den Schlitten in Bewegung zu setzen.

Erfindungsgemäß kann die Antriebsführung derart bogenförmig ausgeführt sein, um eine Schwenkbewegung des Schwenkelementes in eine lineare Bewegung des Schlittens umzuwandeln. Dabei kann die Antriebsführung im Wesentlichen vertikal ausgebildet sein. Dadurch wird der Bauraum der Vorrichtung optimal ausgenutzt und auf eine vorteilhafte Weise reduziert. In der Ruheposition des Schlittens kann das Schwenkelement ungefähr in der Mitte der Antriebsführung eingreifen. Wenn das Schwenkelement durch den externen Antrieb in eine Richtung zur Betriebsposition des Schlittens verschwenkt wird, kann das Schwenkelement in der Antriebsführung zunächst in eine untere Position gleiten, während der Schlitten sich von der Ruheposition entfernt. Wird das Schwenkelement noch weiter verschwenkt, kann das Schwenkelement in der Antriebsführung zurück nach oben in die Mitte der Antriebsführung verfahren, während der Schlitten seine Betriebsposition erreicht. Um den Schlitten aus der Betriebsposition zurück in die Ruheposition zu bewegen, kann der Antrieb das Schwenkelement in eine entgegengesetzte Richtung verschwenken. Ferner kann das Schwenkelement in der Ruheposition des Schlittens aus der Mitte der Antriebsführung in eine obere Stellung verfahren werden ohne den Schlitten zu bewegen, wodurch ein Freilauf für den Antrieb entsteht. Vorteilhafterweise kann das Schwenkelement in der oberen Stellung in der Antriebsführung derart verrasten, dass eine Bewegung des Schlittens in die Betriebsposition verhindert ist. Hierdurch kann der Schlitten auch in der Ruheposition arretiert werden. Das Deckelelement kann dabei nicht geöffnet werden, sodass die Kamera gegen eine unbefugte Manipulation gesichert ist.

Erfindungsgemäß kann die erste Führung als eine obere und/oder eine untere Führungsschiene im Gehäuse ausgeformt sein, um die Bewegung des Schlittens zu stabilisieren. Zusätzlich oder alternativ dazu kann die Führung als eine Nut an den Seitenwandungen des Gehäuses ausgebildet sein. Zudem oder ausschließlich kann die Führung durch eine besondere Form des Gehäuses gebildet sein, die derart komplementär an die Form des Schlittens angepasst ist, dass der Schlitten verrutschsicher und kippfest zwischen der Ruheposition und der Betriebsposition geführt wird. Die erste Führung ist insbesondere als reine Linearführung ausgestaltet, sodass der Schlitten im Gehäuse vergleichbar zu einer Schublade im Schrank bewegbar ist, wie im folgenden Text erwähnt wird.

Vorteilhafterweise kann das Gehäuse eine erste Gehäuseschale und eine zweite Gehäuseschale aufweisen. Erfindungsgemäß kann der Schlitten und das Getriebe sowie das Deckelement in bzw. an der ersten Gehäuseschale angeordnet werden, um die Montage der Vorrichtung zu vereinfachen. Dabei ist es denkbar, dass die erfindungsgemäße Vorrichtung als ein Baukasten in der ersten Gehäuseschale eingesetzt werden kann, um den Aufbau der Vorrichtung noch weiter zu erleichtern. Anschließend kann die zweite Gehäuseschale an der ersten Gehäuseschale per Form- und/oder Kraftschluss und/oder mittels Rast- oder Klemmelemente, insbesondere lösbar befestigt werden. Hiermit kann erreicht werden, dass die Vorrichtung nicht nur einfach zu montieren ist, sondern auch, dass die Vorrichtung ebenfalls leicht auszubauen oder auszutauschen ist. Zur Reparatur oder zum Austausch der Kamera braucht lediglich die zweite Gehäuseschale abmontiert zu werden, um den Zugang zur Vorrichtung bzw. zur Kamera zu ermöglichen.

Weiterhin ist es denkbar, dass die erste Führung und die zweite Führung an der ersten Gehäuseschale und eine komplementäre erste Führung und eine komplementäre zweite Führung an der zweiten Gehäuseschale ausgebildet sein können. Dies kann eine zusätzliche Sicherheit mit sich bringen, um den Schlitten derart stabil zwischen der Ruheposition und der Betriebsposition zu führen, dass der Schlitten im Gehäuse nicht kippen und nicht verrasten kann.

Vorteilhafterweise kann der Schlitten ein erstes Gleitelement aufweisen, welches mit der ersten Führung zusammenwirken kann, um den Schlitten zu führen. Das erste Gleitelement kann in Form eines Stabes ausgeführt werden, welcher durchgehend durch zwei seitliche Öffnungen im Schlitten hindurchragen kann. Dabei kann das Gleitelement mit einem Ende in eine korrespondierende erste Führung an der ersten Gehäuseschale und insbesondere mit dem anderen Ende in eine erste Führung an der zweiten Gehäuseschale eingreifen. Zudem kann es vorgesehen sein, dass sich die Kamera im eingebauten Zustand innerhalb des Schlittens vor dem Gleitelement befindet. Das Gleitelement kann dabei verhindern, dass die Kamera nach hinten verrutschen kann oder herausgezogen werden kann. Alternativ kann das erste Gleitelement als zwei seitliche Vorsprünge am Schlitten ausgeformt sein, die in der korrespondierenden ersten Führung geführt werden können und an welchen das Deckelelement schwenkbar gelagert werden kann. Gemäß der Erfindung kann das Deckelelement am ersten Gleitelement drehbar um eine Achse gelagert sein, die insbesondere durch das Gleitelement verlaufen kann. Vorteilhaft ist dabei, dass das Gleitelement gleichzeitig zur Führung des Schlittens und zum schwenkbaren Lagern des Deckelelementes dienen kann. Somit kann die Anzahl der erforderlichen Bauteile reduziert werden und eine einfache und kompakte Vorrichtung zur Aufnahme einer Kamera geschaffen werden.

Die erfindungsgemäße erste Führung kann ausschließlich als eine Linearführung ausgebildet sein, um den Schlitten zwischen der Ruheposition und der Betriebsposition linear zu bewegen. Die Ausgestaltung der ersten Führung wird dadurch besonders einfach. Vorteilhafterweise kann der Schlitten stabil entlang der ersten linearen Führung geleitet werden. Auch die Herstellung sowie der Aufbau der Vorrichtung sowie des erfindungsgemäßen Getriebes werden dadurch zusätzlich vereinfacht.

Vorteilhafterweise kann das Deckelelement zumindest ein zweites Gleitelement aufweisen, welches mit der zweiten Führung zusammenwirken kann, um das Deckelelement zumindest von einer Seite zu führen bzw. antreiben zu können. Erfindungsgemäß kann die zweite Führung einen ersten Abschnitt aufweisen, um das Deckelelement in der Nähe der Schließposition linear zu bewegen, und einen zweiten Abschnitt aufweisen, um das Deckelelement in der Nähe der Öffnungsposition zu verschwenken. Der erste Abschnitt kann dabei linear und insbesondere parallel zur ersten Führung und der zweite Abschnitt kann bogenförmig oder linear, im Wesentlichen senkrecht zur ersten Führung ausgeformt sein. Der erste lineare Abschnitt der zweiten Führung kann dafür sorgen, dass das Deckelelement linear mit dem Schlitten, weg von der Fahrzeugkarosserie bewegt werden kann. Der zweite Abschnitt der zweiten Führung kann derart ausgebildet sein und derart mit dem zweiten Gleitelement zusammenwirken, dass das Deckelelement erst nach einer Bewegung weg von der Fahrzeugkarosserie in die Öffnungsposition verschwenken kann.

Ein Erfindungsgedanke liegt bei der Führung des Deckelelementes darin, dass das Deckelelement in der ersten Bewegungsphase im Wesentlichen linear und in der zweiten Bewegungsphase im Wesentlichen schwenkbar bewegt werden kann. Das bedeutet, dass das Deckelelement zuerst von der Fahrzeugkarosserie entfernt wird, bevor es in die Öffnungsposition verschwenkt werden kann. Damit wird gewährleistet, dass das Deckelelement stets einen ausreichenden Abstand zur Fahrzeugkarosserie aufweist, bevor es nach oben in die Öffnungsposition verschwenkt werden kann. Die erfindungsgemäße Vorrichtung sorgt dafür, dass in der Schließposition das Deckelelement optimal an der Öffnung im Gehäuse anliegen kann und eine möglichst bündige Ebene mit der Fahrzeugkarosserie bilden kann. Das Erscheinungsbild des Fahrzeuges wird damit deutlich verbessert. Gleichzeitig gewährleistet die Vorrichtung, dass in der Öffnungsposition das Deckelelement einen geeigneten Abstand zur Fahrzeugkarosserie halten kann, sodass das Deckelelement nicht dagegen stoßen kann und die Fahrzeugkarosserie nicht beschädigen kann.

Das erfindungsgemäße Getriebe kann vorteilhafterweise derart aufgebaut sein, dass die erste Bewegungsphase und die zweite Bewegungsphase sequentiell ausgeführt werden. Alternativ ist jedoch denkbar, dass das Getriebe derart ausgebildet werden kann, dass sich die erste und die zweite Bewegungsphase zumindest zum Teil überlagern können. Das Getriebe ist im Sinne der vorliegenden Erfindung ein Antriebsmechanismus.

Erfindungsgemäß kann eine Schutzmembran vorgesehen sein, die den freien Raum zwischen der Öffnung im Gehäuse und dem Schlitten abdichtend abschließen kann, um das Eindringen von Schmutzpartikeln und Feuchtigkeit in das Gehäuse zu verhindern und die Kamera vor Witterungseinflüssen zu schützen. Die Schutzmembran kann in Form einer Balgenmembran, insbesondere schlauchförmig, ausgeformt sein. Dabei kann ein Ende der balgenförmigen Schutzmembran an einem Rand der Öffnung außenseitig am Gehäuse angebracht werden. Dieses Ende der Schutzmembran kann dabei außenseitig an der Öffnung im Gehäuse befestigt bzw. am Rand der Öffnung geklebt oder verschraubt werden. Das zweite Ende der balgenförmigen Schutzmembran kann an einer Öffnung, insbesondere der Aufnahmeöffnung, des Schlittens ebenfalls außenseitig befestigt werden. Dieses Ende der Schutzmembran kann durch einen Spannring bzw. ein Spannelement am Rand der Öffnung gehalten werden und/oder am Rand der Öffnung geklebt werden. Die Schutzmembran kann dabei aus einem elastischen Material, vorzugsweise Gummi, ausgeführt sein. Während der Bewegung des Schlittens kann die Schutzmembran verformt werden. Vorteilhafterweise schließt die Membran die Öffnung im Gehäuse vollständig abdichtend ab, sodass weder Schmutz noch Feuchtigkeit ins Gehäuse eindringen und die Kamera beschädigen können.

Zudem kann es vorgesehen sein, dass die Öffnung mit einem Kragenelement, insbesondere in Form einer Dichtung, ausgeführt sein kann. An dem Kragenelement kann das Deckelelement geräuschlos und/oder abdichtend anliegen und gegebenenfalls abfedern, wenn der Schlitten sich in der Ruheposition befindet. Vorteilhafterweise kann das Kragenelement aus einem elastischen Material ausgebildet sein.

Das Gehäuse der Vorrichtung und/oder das Getriebe und/oder der Schlitten und/oder die Schwenkelemente können aus einem beliebigen Kunststoff, Metall und dergleichen ausgebildet sein, das insbesondere einen höheren Härtegrad aufweist als das Material der Schutzmembran und/oder des Kragenelementes.

Ferner wird die erfindungsgemäße Aufgabe durch ein Verfahren zur Montage der oben beschriebenen Vorrichtung mit sämtlichen beanspruchten Merkmalen gelöst. Die Montage kann dabei folgende Schritte aufweisen: in einem ersten Schritt können das Getriebe, der Schlitten und das Deckelelement in bzw. an einer ersten Gehäuseschale angeordnet werden, in einem zweiten Schritt können die zweite Gehäuseschale mit der ersten Gehäuseschale derart lösbar befestigt werden, dass das Deckelelement zwischen einer Schließposition, in welcher das Deckelelement die Öffnung abdeckt, und einer Öffnungsposition, in welcher das Deckelelement die Öffnung freigibt, mindestens eine erste Bewegungsphase und eine zweite Bewegungsphase ausführen kann.

Außerdem wird die erfindungsgemäße Aufgabe durch ein Verfahren nach Anspruch 15 zur Betätigung der oben beschriebenen Vorrichtung mit sämtlichen beanspruchten Merkmalen gelöst. Die Vorrichtung kann dabei ein Gehäuse aufweisen, in welchem ein Schlitten zum austauschbaren Befestigen der Kamera und ein Deckelelement zum Verschließen einer Öffnung im Gehäuse, durch welche die Kamera nach außen gerichtet sein kann, bewegbar aufgenommen sein können. Die Erfindung sieht dabei vor, dass der Schlitten aus einer Ruheposition, in welcher die Kamera inaktiv ist, und einer Betriebsposition, in welcher Bilder aktiv durch die Kamera erfassbar sind, linear bewegt werden kann. Dabei kann das Deckelelement aus einer Schließposition, in welcher das Deckelelement die Öffnung abdeckt, in eine Öffnungsposition, in welcher das Deckelelement die Öffnung freigibt, zu einem Teil linear und zu einem anderen Teil schwenkbar bewegt werden. Das heißt, dass das Deckelelement zunächst linear aus dem Gehäuse herausgefahren werden kann, um einen ausreichenden Abstand zur Fahrzeugkarosserie zu gewinnen, und anschließend nur dann in die Öffnungsposition verschwenkt werden kann, wenn genügend Platz für eine Schwenkbewegung vorhanden ist.

Erfindungsgemäß können die Merkmale der Beschreibung und der Ansprüche der erfindungsgemäßen Vorrichtung sowie des erfindungsgemäßen Verfahrens zur Montage und des erfindungsgemäßen Verfahren zur Betätigung sowohl einzeln für sich als auch in den verschiedensten Kombinationen erfindungswesentlich sein. Weitere, die Erfindung verbessernde Maßnahmen werden nachstehend gemeinsam mit der Beschreibung der bevorzugten Ausführungsbeispiele der Erfindung anhand der Figuren näher dargestellt. Es zeigen:
- Fig. 1: eine erfindungsgemäße Vorrichtung in einer Explosionsansicht,
- Fig. 2a: die erfindungsgemäße Vorrichtung in einer Seitenansicht,
- Fig. 2b: ein erfindungsgemäßes Getriebe in der Seitenansicht der Figur 2a in der Schließposition eines Deckelelementes,
- Fig. 2c: das erfindungsgemäße Getriebe in der Seitenansicht der Figur 2a in der Öffnungsposition des Deckelelementes,
- Fig. 3a: das erfindungsgemäße Getriebe aus einem anderen Blickwinkel als in Figur 2a in der Schließposition eines Deckelelementes,
- Fig. 3b: das erfindungsgemäße Getriebe aus dem Blickwinkel der Figur 3a in der Öffnungsposition eines Deckelelementes,
- Fig. 4a: eine Seitenansicht der erfindungsgemäßen Vorrichtung in einer Ruheposition eines Schlittens,
- Fig. 4b: eine Seitenansicht der erfindungsgemäßen Vorrichtung in einer Position zwischen der Ruheposition und einer Betriebsposition des Schlittens, und
- Fig. 4c: eine Seitenansicht der erfindungsgemäßen Vorrichtung in der Betriebsposition des Schlittens.

In den Figuren werden für die gleichen technischen Merkmale auch für unterschiedliche Ausführungsbeispiele die identischen Bezugszeichen verwendet.

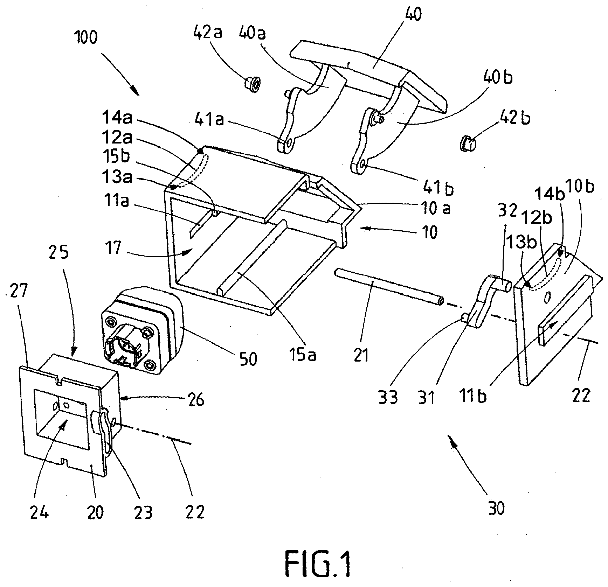

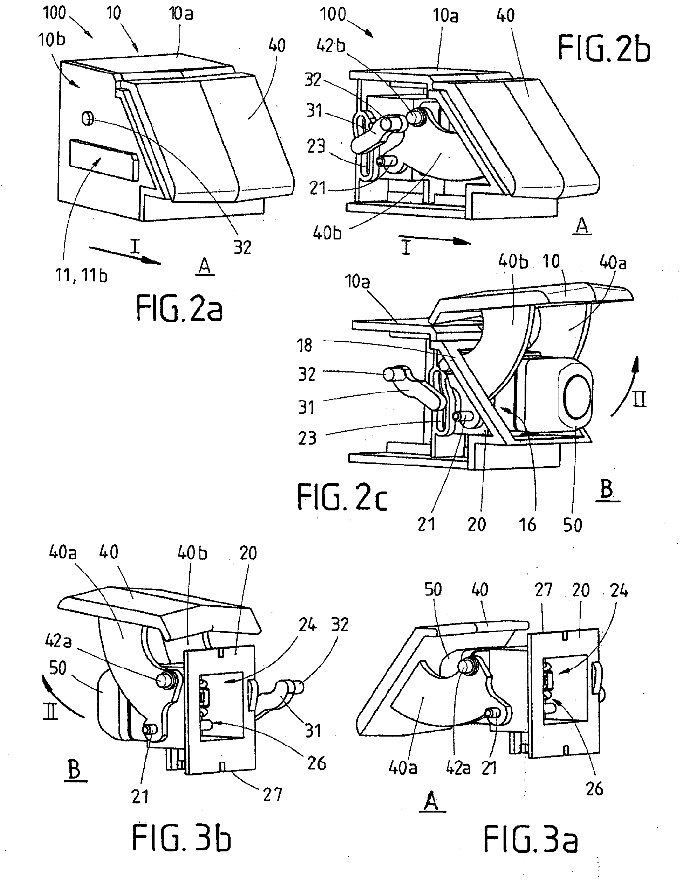

Figur 1 zeigt eine erfindungsgemäße Vorrichtung 100 in einer Explosionsansicht, die einen Schlitten 20 aufweist, an welchem eine Kamera 50 austauschbar angeordnet werden kann. Ferner sieht die Vorrichtung 100 ein Gehäuse 10 vor, in welchem der Schlitten 20 in einer ersten Führung 11a, 11b, 15a, 15b, 17 zwischen einer Ruheposition A, in welcher die Kamera 50 inaktiv ist, und einer Betriebsposition B, in welcher Bilder aktiv durch die Kamera 50 erfassbar sind, bewegbar aufgenommen werden kann. Die Figuren 2b, 3a und 4a zeigen den Schlitten 20 in mehr Details in der Ruheposition A, wobei die Figuren 2c, 3b und 4c den Schlitten 20 in der Betriebsposition B darstellen.

Bei der Vorrichtung 100 ist ein Deckelelement 40 vorgesehen, das eine Öffnung 16 im Gehäuse 10 abschließen kann, durch die die Kamera 50 nach außen gerichtet sein kann, wie es in Figuren 2c, 3b und 4c zu erkennen ist. Das Deckelelement 40 weist dabei einen ersten Schenkel 40a und einen zweiten Schenkel 40b auf, die bogenförmig ausgebildet sind und den Schlitten 20 im eingebauten Zustand zum Teil seitlich umschließen. Die Schenkel 40a, 40b können derart am Schlitten 20 gelagert sein, dass das Deckelelement 40 um eine Achse 22 verschwenkt werden kann. Hierzu weisen die Schenkel 40a, 40b jeweils eine Öffnung 41a, 41b auf, durch welche ein Gleitelement 21 hindurchragen kann, welches durch die Schwenkachse 22 für das Deckelelement 40 gebildet wird. Die Achse 22 mit dem Gleitelement 21 werden dabei durch ebenfalls zwei Öffnungen im Schlitten 20 geführt, sodass das Deckelelement 40 bezüglich des Schlittens 20 verschwenkt werden kann. Die Achse 22 mit dem Gleitelement 21 werden derart durch die entsprechenden Öffnungen im Schlitten 20 geführt, dass sie sich im eingebauten Zustand hinter der Kamera 50 erstrecken, um die Kamera 50 gegen ein Herausfallen nach hinten zu sichern. Ferner sind die Schenkel 40a, 40b mit jeweils einem zweiten Gleitelement 42a, 42b versehen, die in einer zweiten Führung 12a, 12b im Gehäuse 10 gelagert werden. Erfindungsgemäß kann das Deckelelement 40 zwischen einer Schließposition C, in welcher das Deckelelement 40 die Öffnung 16 abdeckt, und einer Öffnungsposition D, in welcher das Deckelelement 40 die Öffnung 16 freigibt, bewegt werden. Die Schließposition C des Deckelelementes 40 ist deutlicher in Figuren 2a, 2b, 3a und 4a dargestellt. Die Öffnungsposition D des Deckelelementes 40 ist ferner in Figuren 2c, 3b und 4c gezeigt. Erfindungsgemäß bewirkt eine Bewegung des Schlittens 20 zwischen einer Ruheposition A und der Betriebsposition B eine Bewegung des Deckelementes 40 zwischen der Schließposition C und der Öffnungsposition D.

Der Schlitten 20 ist erfindungsgemäß mit einer gehäuseseitigen Montageöffnung 24 ausgeführt, um die Kamera 50 austauschbar aufzunehmen. In der Montageöffnung 24 können verschiedene Kameras 50 aufgenommen werden. Ferner weist der Schlitten 20 eine nach außen zeigende Aufnahmeöffnung 25 auf. Durch die Aufnahmeöffnung 25 und durch die Öffnung 16 im Gehäuse 10 kann ein Objektiv der Kamera 50 in der Betriebsposition B des Schlittens 20 den Außenbereich eines Fahrzeugs bildlich erfassen. Der Schlitten 20 weist dabei einen Adapter 26 für die Kamera 50 auf, um sicherzustellen, dass verschiedene Kameramodelle sicher und befestigt im Schlitten 20 aufgenommen werden können. Der Adapter 26 kann als eine spezielle Form der Innenwand 26 des Schlittens 20 ausgeformt sein, um die Kamera 50 im eingesetzten Zustand durch einen Form- und/oder Kraftschluss zuverlässig zu halten. Alternativ oder zusätzlich kann der Schlitten 20 Rast- und/oder Klemmelemente als einen Adapter 26 aufweisen, die beispielsweise in der Montageöffnung 24 ausgebildet sein können. Die Rast- und/oder Klemmelemente können dabei mit komplementären Halteelementen an der Kamera 50 zusammenwirken, um einen Form- und/oder Kraftschluss zu schaffen. Die Figuren 3a und 3b zeigen den erfindungsgemäßen Schlitten 20 von der Seite der Montageöffnung 24, wobei an der Innenwand 26 des Schlittens 20 der Adapter 26 zum Halten der Kamera 50 ausgebildet werden kann.

Wie ferner in Figur 1 zu sehen ist, weist das Getriebe 30 ein, insbesondere hebelförmiges, Schwenkelement 31 auf, das zwischen dem Schlitten 20 und einer Gehäuseschale 10b an einem antriebsseitigen Nocken 32 (Antriebswelle) schwenkbar, insbesondere drehbar, gelagert werden kann. Dabei greift der antriebsseitige Nocken 32 in eine Öffnung in der Gehäuseschale 10b ein und kann an einem Drehschaft eines nicht dargestellten externen Antriebes drehfest befestigt werden und eine Drehachse für das Schwenkelement 31 bilden. Der Antrieb kann den Nocken 32 verdrehen und somit das Schwenkelement 31 verschwenken. An der Seite des Schlittens 20 weist das Schwenkelement 31 einen gehäuseseitigen Nocken 33 auf, welcher mit einer Antriebsführung 23 des Schlittens 20 zusammenwirken kann, um den Schlitten 20 und folglich das Deckelelement 40 in Bewegung zu setzen.

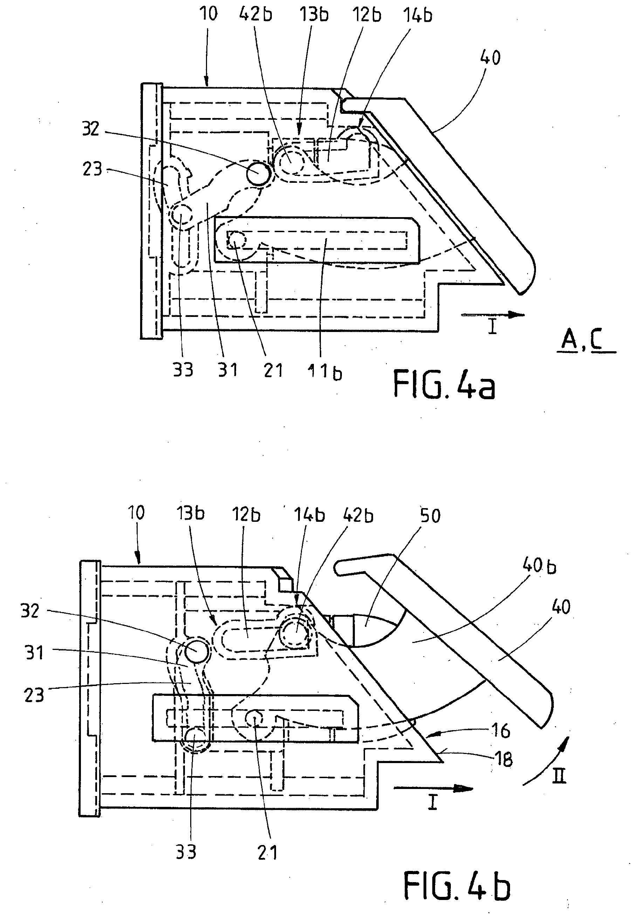

Die Antriebsführung 23, die außerdem in Figuren 4a bis 4c dargestellt ist, ist bogenförmig ausgeführt und erstreckt sich im Wesentlichen vertikal und senkrecht zur ersten Führung 11a, 11b, 15a, 15b. Die Ausgestaltung der Antriebsführung 23 dient zum einen dazu, den Bauraum der erfindungsgemäßen Vorrichtung optimal auszunutzen. Zum anderen ist es die Funktion der Antriebsführung 23, eine Schwenkbewegung des Schwenkelementes 31 in eine lineare Bewegung I des Schlittens 20 umzuwandeln, wie näher in den Figuren 4a bis 4b veranschaulicht ist und unten im Detail beschrieben wird.

Das erfindungsgemäße Gehäuse 10 weist eine erste Gehäuseschale 10a und eine zweite Gehäuseschale 10b auf. Wie in Figur 1 gezeigt ist, kann der Schlitten 20 und das Getriebe 30 sowie die Schenkel 40a, 40b des Deckelementes 40 in bzw. an der ersten Gehäuseschale 10a angeordnet werden. Die Montage der Vorrichtung 100 wird hiermit auf eine vorteilhafte Weise erleichtert. Nachdem die Bauelemente 20, 30 und 40 in der ersten Gehäuseschale 10a angeordnet sind, kann anschließend die zweite Gehäuseschale 10b an der ersten Gehäuseschale 10a befestigt werden. Hierzu ist eine form- und/oder kraftschlüssige Verbindung, optional mit zusätzlichen Rast- oder Klemmelementen, denkbar. Die zweite Gehäuseschale 10b ist zwecks Austausches von Bauelementen, insbesondere der Kamera 50 jederzeit wieder abnehmbar.

Der erste Montageschritt der Vorrichtung gemäß Figur 1 kann anhand der Figuren 3a, 3b erläutert werden. Dabei kann die Kamera 50 in die Montageöffnung 24 oder in die Aufnahmeöffnung 25 des Schlittens 20 eingeführt werden. Die mit dem Schlitten 20 zusammengesetzte Kamera 50 können im zweiten Montageschritt in die erste Gehäuseschale 10a eingeführt werden, wie in Figuren 2b, 2c gezeigt ist. Auf dem Schlitten 20 kann das Deckelelement 40 aufgesetzt werden, welches den Schlitten 20 mit den Schenkeln 40a, 40b seitlich umschließen kann, wie in den Figuren 3b und 3b veranschaulicht. Dabei zeigen die Figuren 3a und 3b die Vorrichtung 100 von einem Blickwinkel von der Seite der Montageöffnung 24 des Schlittens 20 ohne die Gehäuseschalen 10a, 10b.

Der zweite Montageschritt kann anhand der Figuren 2b und 2c erklärt werden. Die mit dem Schlitten 20 zusammengesetzte Kamera 50 können nun in die erste Gehäuseschale 10a eingeführt werden. Anschließend kann das Deckelelement 40 von außen durch die Öffnung 16 in der ersten Gehäuseschale 10a am Schlitten 20 aufgesetzt werden, bis die Schenkel 40a, 40b den Schlitten 20 beidseitig umschließen. Das Deckelelement 40 wird derart positioniert, dass die Aufnahmeöffnungen 41a, 41b für das Gleitelement 21 in den Schenkeln 40a, 40b des Deckelelementes 40 und die Aufnahmeöffnungen im Schlitten 20 übereinander liegen. Weiterhin kann das erste Gleitelement 21 und die Achse 22 durch die Öffnungen 41a, 41b geführt werden bis das linke Ende des ersten Gleitelementes 21 in die erste Führung 11a und das zweite Gleitelement 42a des Schenkels 40a in die zweite Führung 12a hineinragt, wobei die Führungen 11a, 12a deutlich in Figur 1 veranschaulicht sind. Somit kann eine Schwenkverbindung zwischen dem Schlitten 20 und dem Deckelelement 40 und eine Wirkverbindung zwischen der zweiten Führung 12a der Gehäuseschale 10a und dem Gleitelement 42a hergestellt werden. Im folgenden Montageschritt kann das Schaukelelement 31 über den gehäuseseitigen Nocken 33 in der Antriebsführung 23 des Schlittens 20 angeordnet werden. In Figur 2b ist die erfindungsgemäße Vorrichtung 100 in der Ruheposition A des Schlittens 20 und in Figur 2c ist die Vorrichtung 100 in Betriebsposition B des Schlittens 20 gezeigt.

In einem abschließenden Montageschritt kann die zweite Gehäuseschale 10b an der ersten Gehäuseschale 10a derart aufgesetzt werden, dass das rechte Ende des ersten Gleitelementes 21 in der ersten Führung 11b, das zweite Gleitelement 42b des Schenkels 40b in der zweiten Führung 12b und der antriebsseitige Nocken 32 des Schwenkelementes 31 in eine entsprechende Öffnung der zweiten Gehäuseschale 10b eingreifen können, wie nachfolgend auch in Figuren 4a bis 4c gezeigt ist.

Figur 2a zeigt die erfindungsgemäße Vorrichtung 100 gemäß Figur 1 im zusammengesetzten Zustand, die die Form eines Baukastens aufweist, welcher modulartig am Fahrzeug montiert werden kann. Der Baukasten ist dabei durch die erste 10a und zweite Gehäuseschale 10b gebildet und von vorne durch das Deckelelement 40 abgedeckt. Die zweite Gehäuseschale 10b weist an der Innenseite eine erste 11a, 11b und eine zweite Führung 12a, 12b auf, über welche das Getriebe 30 mit dem Schlitten 20 und der Kamera 50 sowie die Schenkel 40a, 40b des Deckelelementes 40 im Gehäuse 10 beweglich gelagert sind. Der getriebeseitige Nocken 32 des in Figur 2a nicht zu sehenden Schwenkelementes 31 kann nun mit einem externen Antrieb verbunden werden und die Vorrichtung kann in Betrieb genommen werden.

Die Figuren 4a bis 4c zeigen ferner die erfindungsgemäße erste 11a, 11b und die zweite Führung 12a, 12b, die jeweils an der ersten 10a und der zweiten Gehäuseschale 10b ausgeformt sind. Dabei sind in der ersten Gehäuseschale 10a eine obere Führungsschiene 15b und eine untere Führungsschiene 15a vorgesehen, die in zwei korrespondierende Ausnehmungen am Rand 27 des Schlittens 20 eingreifen, um die Bewegung des Schlittens 20 innerhalb des Gehäuses 10 zu führen und zu stabilisieren. Zusätzlich kann es vorgesehen sein, dass das Innere 17 des Gehäuses 10 derart ausgeformt sein kann, dass es mit dem Rand 27 des Schlittens 20 eine erste Führung 17 für den Schlitten 20 bilden kann. Dadurch kann verhindert werden, dass der Schlitten 20 in der Gehäuseschale 10a gekippt oder verklemmt wird.

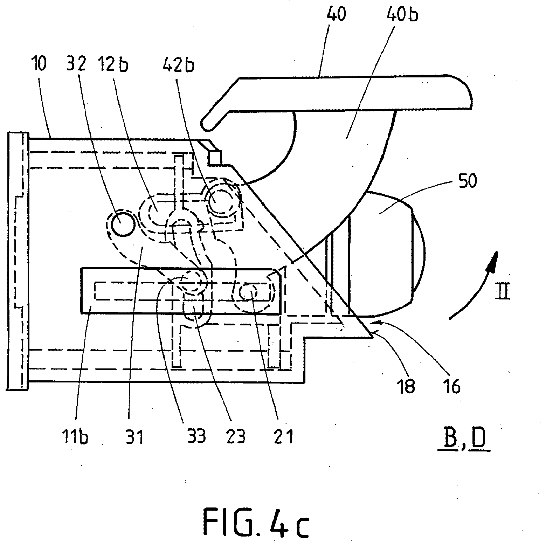

Die erfindungsgemäße erste Führung 11a, 11b, 12a, 12b, 17 ist ausschließlich als eine Linearführung ausgebildet, um den Schlitten 20 zwischen der Ruheposition A und der Betriebsposition B, wie gezeigt in Figuren 4a bis 4c, linear zu bewegen. Hierzu greift ein Ende des Gleitelementes 21 in die erste Führung 11a, 11b ein. Das Deckelelement 40 weist wiederum ein zweites Gleitelement 42a, 42b auf, welches in der zweiten Führung 12a, 12b geführt wird, um das Deckelelement 40 von der Schließposition C in die Öffnungsposition D zu überführen. Zusätzlich wird das Deckelement 40 an der Achse 22 verschwenkt, die durch das Gleitelement 21 verläuft. Erfindungsgemäß weist die zweite Führung 12a, 12b einen ersten Abschnitt 13a, 13b auf, welcher parallel zur ersten Führung 11a, 11b verläuft. Über den ersten Abschnitt 13a, 13b wird das Deckelelement 40 in der Nähe der Schließposition C annährend linear bewegt, wie durch den Pfeil I angedeutet ist. Der erste lineare Abschnitt 13a, 13b der zweiten Führung 12a, 12b sorgt erfindungsgemäß dafür, dass das Deckelelement 40 mit dem Schlitten 20 weg von der Fahrzeugkarosserie bewegt wird. Die lineare Bewegung des Deckelelementes 40 bestimmt die erste Bewegungsphase I. Zudem weist die zweite Führung 12a, 12b einen zweiten Abschnitt 14a, 14b auf, der sich senkrecht zum ersten Abschnitt 13a, 13b erstreckt. Der zweite Abschnitt 14a, 14b bewirkt, dass das Deckelelement 40 in der Nähe der Öffnungsposition D verschwenkt wird. Der zweite Abschnitt 14a, 14b kann alternativ bogenförmig ausgeformt sein. Der zweite Abschnitt 14a, 14b der zweiten Führung 12a, 12b wirkt derart mit dem zweiten Gleitelement 42a, 42b zusammen, dass das Deckelelement 40 erst nach der ersten Bewegungsphase I eine zweite Bewegungsphase II ausführen kann. Hierbei kann das Deckelelement 40 in die Öffnungsposition D der Figur 4c bezüglich des Schlittens 20 verschwenkt werden, während der Schlitten 20 weiter in Richtung des Pfeils I in die Betriebsposition B bewegt werden kann.

In der Ruheposition A des Schlittens 20 (Figur 4a) greift der gehäuseseitige Nocken 33 des Schwenkelementes 31 in der Mitte der Antriebsführung 23 ein. Wenn das Schwenkelement 31 durch den externen Antrieb in die Richtung des Pfeiles II verschwenkt wird, gleitet der gehäuseseitige Nocken 33 in der Antriebsführung 23 zunächst nach unten. Der Schlitten 20 wird dabei nach rechts aus der Ruheposition A in die Position der Figur 4b in Richtung des Pfeils I angetrieben. Danach wird das Schwenkelement 31 noch weiter in Richtung II verschwenkt. Dabei gleitet der gehäuseseitige Nocken 33 in der Antriebsführung 23 zurück nach oben, bis ungefähr in die Mitte der Antriebsführung 23. Gleichzeitig verfährt der Schlitten 20 noch weiter in Richtung I zur seinen Betriebsposition B der Figur 4c. Zurück in die Betriebsposition A kann der Schlitten 20 bewegt werden, wenn das Schwenkelement 31 in eine entgegengesetzte Richtung des Pfeils II verschwenkt wird. Erfindungsgemäß kann der Nocken 32 aus der Position der Figur 4a nach oben in der Antriebsführung 23 verfahren und dort verrasten ohne den Schlitten 20 zu bewegen, um den Schlitten 20 in der Ruheposition A zu arretieren. Das Deckelelement 40 kann dabei nicht geöffnet werden, wobei die Kamera 50 gegen eine Manipulation geschützt ist. Hierdurch wird ein Freilauf für den Antrieb geschaffen, sodass das Getriebe 30 selbsthemmend wird und mechanische Spannungen vermieden werden.

Somit kann das Getriebe 30 den Schlitten 20 durch einen externen Antrieb zwischen der Ruheposition A der Figur 4a und der Betriebsposition B der Figur 4c antreiben, wobei das Deckelelement 40 zwischen der Schließposition C und der Öffnungsposition D die erste Bewegungsphase I und die zweite Bewegungsphase II ausführen kann, wie gezeigt in den Figuren 4a bis 4c. Das Deckelelement 40 wird erfindungsgemäß durch den Schlitten 20 einerseits linear durch den gehäuseseitigen Nocken 33 angetrieben und andererseits durch die Einwirkung des zweiten Abschnittes 14a, 14b der zweiten Führung 12a, 12b in die Öffnungsposition D um den Nocken 33 verschwenkt, in welcher Position die Sicht nach außen für die Kamera 50 frei ist. Erfindungsgemäß ist es wesentlich, dass das Deckelelement 40 sich zuerst von der Fahrzeugkarosserie linear entfernt, bevor es in die Öffnungsposition D verschwenkt, um die Fahrzeugkarosserie nicht anzustoßen. Wohingegen in der Schließposition C das Deckelelement 40 beinahe bündig an der Fahrzeugkarosserie anliegt. Die erste Bewegungsphase I und die zweite Bewegungsphase II können ausschließlich sequentiell ausgeführt werden oder sich zum Teil überlagern.

Erfindungsgemäß kann ferner eine in den Figuren 1 bis 4c nicht dargestellte Schutzmembran vorgesehen sein, um den freien Raum zwischen der Öffnung 16 im Gehäuse 10 und dem Schlitten 20 abzudichten. Die Schutzmembran kann vorteilhafterweise das Eindringen von Schmutzpartikeln und Feuchtigkeit in das Gehäuse 10 verhindern und die Kamera 50 vor Witterungseinflüssen schützen. Die Schutzmembran kann als eine Balgenmembran ausgeführt sein und außenseitig am Gehäuse 10 befestigt sein. Die Schutzmembran kann aus einem elastischen Material ausgeführt sein, wobei während der Bewegung des Schlittens 20 die Schutzmembran 9 verformt werden kann.

Außerdem kann vorgesehen sein, dass die Öffnung 16 mit einem Kragenelement 18, insbesondere in Form einer Dichtung, aus einem elastischen Material ausgebildet sein kann, an welchem das Deckelelement 40 abfedern kann, um Schließgeräusche zu verhindern, wenn der Schlitten 20 in die Ruheposition A zurückfährt. Das Kragenelement 18 kann zudem abdichtend wirken.

Das Gehäuse 10 der Vorrichtung und/oder das Getriebe 30 und/oder der Schlitten 20 und/oder das Schwenkelement 31 können beispielsweise aus Kunststoff ausgebildet sein und durch einen Formprozess wie Formgießen oder Spritzgießen hergestellt werden. Das Gehäuse 10 und das Getriebe 30, einschließlich des Schwenkelementes 31 können aus einem ersten Material und die Schutzmembran und das Kragenelement 18 aus einem zweiten Material hergestellt werden, wobei das erste Material einen höheren Härtegrad aufweisen kann als das zweite Material.

### Bezugszeichenliste

- 10: Gehäuse
- 10a: erste Gehäuseschale
- 10b: zweite Gehäuseschale
- 11a: erste Führung
- 11b: erste Führung
- 12a: zweite Führung
- 12b: zweite Führung
- 13a: erster Abschnitt der zweiten Führung 12a, 12b
- 13b: erster Abschnitt der zweiten Führung 12a, 12b
- 14a: zweiter Abschnitt der zweiten Führung 12a, 12b
- 14b: zweiter Abschnitt der zweiten Führung 12a, 12b
- 15a: erste Führung, Führungsschiene als erste Führung
- 15b: erste Führung, Führungsschiene als erste Führung
- 16: Öffnung im Gehäuse
- 17: erste Führung, Innenseite des Gehäuses als erste Führung
- 18: Kragenelement

- 20: Schlitten
- 21: erstes Gleitelement
- 22: Achse
- 23: Antriebsführung
- 24: Montageöffnung
- 25: Aufnahmeöffnung
- 26: Adapter

- 30: Getriebe
- 31: Schwenkelement
- 32: antriebsseitiger Nocken des Schwenkelementes 31
- 33: gehäuseseitiger Nocken des Schwenkelementes 31
- 40: Deckelelement
- 40a: erster Schenkel
- 40b: zweiter Schenkel
- 41a: Öffnung zur Aufnahme des ersten Gleitelementes 21
- 41b: Öffnung zur Aufnahme des ersten Gleitelementes 21
- 42a: zweites Gleitelement
- 42b: zweites Gleitelement

- 50: Kamera

- A: Ruheposition des Schlittens (20)
- B: Betriebsposition des Schlittens (20)
- C: Schließposition des Deckelelementes (40)
- D: Öffnungsposition des Deckelelementes (40)

- I: erste Bewegungsphase
- II: zweite Bewegungsphase

## Patentansprüche

1. Vorrichtung (100) zur Aufnahme einer Kamera (50), die insbesondere als Einparkhilfe eines Kraftfahrzeuges dient, mit
einem Schlitten (20), an welchem die Kamera (50) austauschbar befestigbar ist,
einem Gehäuse (10), in welchem der Schlitten (20) in einer ersten Führung (11a, 11b, 15a, 15b, 17) zwischen einer Ruheposition (A), in welcher die Kamera (50) inaktiv ist, und einer Betriebsposition (B), in welcher Bilder aktiv durch die Kamera (50) erfassbar sind, bewegbar aufgenommen ist,
einem Deckelelement (40), das eine Öffnung (16) im Gehäuse (10) abschließt, durch die die Kamera (50) nach außen gerichtet ist,
**dadurch gekennzeichnet, dass**
das Deckelelement (40) einerseits schwenkbar am Schlitten (20) gelagert ist,
und andererseits in einer zweiten Führung (12a, 12b) im Gehäuse (10) zwischen einer Schließposition (C), in welcher das Deckelelement (40) die Öffnung (16) abdeckt, und einer Öffnungsposition (D), in welcher das Deckelelement (40) die Öffnung (16) freigibt, bewegbar aufgenommen ist,
und einem Getriebe (30), welches den Schlitten (20) durch einen externen Antrieb derart zwischen der Ruheposition (A) und der Betriebsposition (B) antreibt, dass das Deckelelement (40) zwischen der Schließposition (C) und der Öffnungsposition (D) mindestens eine erste Bewegungsphase (I) und eine zweite Bewegungsphase (II) ausführt, wobei das Deckelelement (40) in der ersten Bewegungsphase (I) im Wesentlichen linear und in der zweiten Bewegungsphase (II) im Wesentlichen schwenkbar bewegbar ist.

2. Vorrichtung (100) nach Anspruch 1,
**dadurch gekennzeichnet,**
**dass** der Schlitten (20) eine gehäuseseitige Montageöffnung (24), um die Kamera (50) austauschbar aufzunehmen, und/oder eine nach außen zeigende Aufnahmeöffnung (25) aufweist, durch welche die Kamera (50) nach außen gerichtet ist, und dass insbesondere der Schlitten (20) einen Adapter (26) für die Kamera (50) aufweist.

3. Vorrichtung (100) nach Anspruch 1 oder 2,
**dadurch gekennzeichnet,**
**dass** das Getriebe (30) ein Schwenkelement (31) aufweist, welches durch den Antrieb verschwenkbar ist, wobei insbesondere das Schwenkelement (31) in eine Antriebsführung (23) am Schlitten (20) eingreift, um den Schlitten (20) in Bewegung zu setzen.

4. Vorrichtung (100) nach einem der vorhergehenden Ansprüche,
**dadurch gekennzeichnet,**
**dass** die Antriebsführung (23) derart bogenförmig ausgeführt ist, um eine Schwenkbewegung des Schwenkelementes (31) in eine lineare Bewegung des Schlittens (20) umzuwandeln.

5. Vorrichtung (100) nach einem der vorhergehenden Ansprüche,
**dadurch gekennzeichnet,**
**dass** das Gehäuse (10) eine obere und/oder eine untere Führungsschiene (15a, 15b) aufweist, um die Bewegung des Schlittens (20) zu stabilisieren und/oder dass das Gehäuse (10) eine erste Gehäuseschale (10a) und eine zweite Gehäuseschale (10b) aufweist, wobei insbesondere der Schlitten (20) und das Getriebe (30) in bzw. an der ersten Gehäuseschale (10a) anbringbar sind, und wobei bevorzugt die zweite Gehäuseschale (10b) an der ersten Gehäuseschale (10a) per Form- und/oder Kraftschluss, insbesondere lösbar befestigbar ist.

6. Vorrichtung (100) nach einem der vorhergehenden Ansprüche,
**dadurch gekennzeichnet,**
**dass** die erste Führung (11a) und die zweite Führung (12a) an der ersten Gehäuseschale (10a) ausgebildet sind und eine komplementäre erste Führung (11b) und eine komplementäre zweite Führung (12b) an der zweiten Gehäuseschale (10b) ausgebildet sind.

7. Vorrichtung (100) nach einem der vorhergehenden Ansprüche,
**dadurch gekennzeichnet,**
**dass** der Schlitten (20) ein erstes Gleitelement (21) aufweist, welches mit der ersten Führung (11a, 11b, 15a, 15b, 17) zusammenwirkt, um den Schlitten (20) zu führen, wobei insbesondere das Deckelelement (40) am ersten Gleitelement (21) drehbar um eine Achse (22) gelagert ist, die insbesondere durch das Gleitelement (21) verläuft.

8. Vorrichtung (100) nach einem der vorhergehenden Ansprüche,
**dadurch gekennzeichnet,**
**dass** die erste Führung (11a, 11b, 15a, 15b, 17) als eine Linearführung ausgebildet ist, um den Schlitten (20) zwischen der Ruheposition (A) und der Betriebsposition (B) linear zu bewegen.

9. Vorrichtung (100) nach einem der vorhergehenden Ansprüche,
**dadurch gekennzeichnet,**
**dass** das Deckelelement (40) zumindest ein zweites Gleitelement (42a, 42b) aufweist, welches mit der zweiten Führung (12a, 12b) zusammenwirkt, um das Deckelelement (40) zu führen.

10. Vorrichtung (100) nach einem der vorhergehenden Ansprüche,
**dadurch gekennzeichnet,**
**dass** die zweite Führung (12a, 12b) einen ersten Abschnitt (13a, 13b) aufweist, um das Deckelelement (40) in der Nähe der Schließposition (C) linear zu bewegen, und einen zweiten Abschnitt (14a, 14b) aufweist, um das Deckelelement (40) in der Nähe der Öffnungsposition (C) zu verschwenken.

11. Vorrichtung (100) nach einem der vorhergehenden Ansprüche,
**dadurch gekennzeichnet,**
**dass** das Getriebe (30) derart aufgebaut ist, dass die erste Bewegungsphase (I) und die zweite Bewegungsphase (II) sequentiell ausgeführt werden, insbesondere die erste Bewegungsphase (I) und die zweite Bewegungsphase (II) zumindest teilweise gleichzeitig erfolgen.

12. Vorrichtung (100) nach einem der vorhergehenden Ansprüche,
**dadurch gekennzeichnet,**
**dass** eine Schutzmembran vorgesehen ist, die den freien Raum zwischen der Öffnung (16) und dem Schlitten (20) abdichtend abschließt, um das Eindringen von Schmutzpartikeln und Feuchtigkeit in das Gehäuse (10) zu verhindern, wobei insbesondere die Schutzmembran (15) aus einem elastischen Material ausgebildet ist.

13. Vorrichtung (100) nach einem der vorhergehenden Ansprüche,
**dadurch gekennzeichnet,**
**dass** die Öffnung (16) ein Kragenelement (18) aufweist, an welchem das Deckelelement (40) anliegt, wenn der Schlitten (20) sich in der Ruheposition (A) befindet, wobei insbesondere das Kragenelement aus einem elastischen Material ausgebildet ist.

14. Vorrichtung (100) nach einem der vorhergehenden Ansprüche,
**dadurch gekennzeichnet,**
**dass** das Kragenelement (18) beim Anliegen des Deckelelementes (40) abfedernd wirkt und/oder als eine Dichtung dient.

15. Verfahren zur Betätigung einer Vorrichtung (100), gemäß einem der vorhergehenden Ansprüche, zur Aufnahme einer Kamera (50), die insbesondere als Einparkhilfe eines Kraftfahrzeuges dient, mit einem Gehäuse (10), in welchem ein Schlitten (20) zum austauschbaren Befestigen der Kamera (50) und ein Deckelelement (40) zum Verschließen einer Öffnung (16) im Gehäuse (10), durch welche die Kamera (50) nach außen gerichtet ist, bewegbar aufgenommen sind,
wobei der Schlitten (20) aus einer Ruheposition (A), in welcher die Kamera (50) inaktiv ist, und einer Betriebsposition (B), in welcher Bilder aktiv durch die Kamera (50) erfassbar sind, linear bewegt wird,
**dadurch gekennzeichnet, dass**
das Deckelelement (40) aus einer Schließposition (C), in welcher das Deckelelement (40) die Öffnung (16) abdeckt, in eine Öffnungsposition (D), in welcher das Deckelelement (40) die Öffnung (16) freigibt, zu einem Teil linear und zu einem anderen Teil schwenkbar bewegt wird, wobei das Deckelelement (40) in der ersten Bewegungsphase (I) im Wesentlichen linear und in der zweiten Bewegungsphase (II) im Wesentlichen schwenkbar bewegt wird.

## Claims

1. Device (100) for the acceptance of a camera (50), which particularly serves as a parking assistance, with
a slide (20), at which the camera (50) is exchangeably assembled,
a housing (10), in which the slide (20) is moveably accepted in a first guidance (11a, 11b, 15a, 15b, 17) between a rest position (A), in which the camera (50) is inactive, and an operating position (B), in which images are actively recordable by the camera (50),
a lid element (40), which closes an opening (16) in the housing (10), through which the camera (50) is directed towards the outside,
**characterized in that**
wherein the lid element (40) is on the one hand pivotably mounted at the slide (20), and on the other hand movably accepted in a second guidance (12a, 12b) in the housing (10) between a closing position (C), in which the lid element (40) covers the opening (16) and an opening position (D), in which the lid element (40) releases the opening (16),
and a gear (30), which drives a slide (20) by an external drive in a way between the rest position (A) and the operating position (B), that the lid element (40) performs at least a first displacement phase (I) and a second displacement phase (II) between the closing position (C) and the opening position (D),
wherein the seating element (40) is substantially pivotably moveable in the second displacement phase (II) and substantially linearly moveable in the first displacement phase (I).

2. Device (100) according to claim 1,
**characterized in that**
the slide (20) comprises a housing side assembly opening (24), in order to exchangeably accept the camera (50), and/or an acceptance opening (25) extending to the outside, through which the camera (50) is directed towards the outside, and that particularly the slide (20) comprises an adapter (26) for the camera (50).

3. Device (100) according to claim 1 or 2,
**characterized in that**
the gear (30) comprises a swing element (31), which is movable by the drive, wherein particularly the swing element (31) engages in a drive guidance (23) at the slide (20), in order to move the slide (20).

4. Device (100) according to one of the preceding claims,
**characterized in that**
the drive guidance (23) is configured arch-like in a way in order to convert a swinging movement of the swing element (31) in a linear movement of the slide (20).

5. Device (100) according to one of the preceding claims,
**characterized in that**
the housing (10) comprises an upper and a lower guidance rail (15a, 15b), in order to stabilize the movement of the slide (20),
and that the housing (10) comprises a first housing shell (10a) and a second housing shell (10b), wherein particularly the slide (20) and the gear (30) can be assembled in or at the first housing shell (10a) and wherein preferably the second housing shell (10b) can be assembled particularly detachable at the first housing shell (10a) via form and/or force fit.

6. Device (100) according to one of the preceding claims,
**characterized in that**
the first guidance (11a) and the second guidance (12a) are configured at the first housing shell (10a) and a complementary first guidance (11b) and a complementary second guidance (12b) are configured at the second housing shell (10b).

7. Device (100) according to one of the preceding claims,
**characterized in that**
the slide (20) comprises a first slide element (21) which interacts with the first guidance (11a, 11b, 15a, 15b, 17) in order to guide the slide (20) wherein particularly the lid element (40) is pivotably mounted about an axis (22) at the first slide element (21) which particularly runs through the slide element (21).

8. Device (100) according to one of the preceding claims,
**characterized in that**
the first guidance (11a, 11b, 15a, 15b, 17) is configured as a linear guidance, in order to linearly move the slide (20) between the rest position (A) and the operating position (B).

9. Device (100) according to one of the preceding claims,
**characterized in that**
the lid element (40) comprises at least a second slide element (42a, 42b), which interacts with the second guidance (12a, 12b), in order to drive the lid element (40).

10. Device (100) according to one of the preceding claims,
**characterized in that**
the second guidance (12a, 12b) comprises a first section (13a, 13b), in order to linearly move the lid element (40) in the vicinity of the closing position (C) and comprises a second section (14a, 14b), in order to move the lid element (40) in the vicinity of the opening position (D).

11. Device (100) according to one of the preceding claims,
**characterized in that**
the gear (30) is assembled in a way that the first displacement phase (I) and the second displacement phase (II) are performed sequentially, particularly that the first displacement phase (I) and the second displacement phase (II) occur at least partially at the same time

12. Device (100) according to one of the preceding claims,
**characterized in that**
a protection membrane is intended, which sealingly closes the free space between the opening (16) and the slide (20) in order to avoid the penetration of dirt particles and moisture into the housing (10) wherein particularly the protection membrane (15) is configured from elastic material.

13. Device (100) according to one of the preceding claims,
**characterized in that**
the opening (16) comprises a collar element (18), at which the lid element (40) abuts, when the slide (20) is in a rest position (A) wherein particularly the collar element is configured from elastic material.

14. Device (100) according to one of the preceding claims,
**characterized in that**
the collar element (18) acts absorbing during the abutting of the lid element (40) and/or serves as a sealing.

15. Method for the actuation of the device (100), according to one of the preceding claims for the acceptance of a camera (50), which particularly serves as a parking assistance with a housing (10), in which a slide is movably accepted for the exchangeable assembly of the camera (50), and a lid element (40) for closing of an opening (16) in the housing (10) through which the camera (50) is directed towards the outside, wherein the slide (20) is linearly moved from a rest position (A), in which the camera (50) is inactive, and an operating position (B), in which images are actively recordable by the camera (50), **characterized in that** the lid element (40) is partly linearly and partly pivotably moved from a closing position (C), in which the lid element (40) covers the opening (16) into an opening position (D), in which the lid element (40) releases the opening (16), wherein the lid element (40) is mainly linearly movable in the first displacement phase (I), and mainly pivotable movable in the second displacement phase (II).

## Revendications

1. Dispositif (100) destiné à recevoir une caméra (50) qui sert en particulier d'aide au stationnement d'un véhicule automobile, comprenant
un chariot (20) sur lequel la caméra (50) est fixée de manière interchangeable,
un boîtier (10) dans lequel le chariot (20) est reçu de manière mobile dans un premier guide (11a, 11b, 15a, 15b, 17) entre une position de repos (A) dans laquelle la caméra (50) est inactive et une position de service (B) dans laquelle des images peuvent être acquises de manière active par la caméra (50),
un élément de recouvrement (40) qui ferme une ouverture (16) dans le boîtier (10) à travers laquelle la caméra (50) est dirigée vers l'extérieur,
**caractérisé en ce**
**que** l'élément de recouvrement (40) est, d'une part, monté de manière pivotante sur le chariot (20) et, d'autre part, reçu de manière mobile dans un deuxième guide (12a, 12b) dans le boîtier (10) entre une position de fermeture (C) dans laquelle l'élément de recouvrement (40) recouvre l'ouverture (16) et une position d'ouverture (D) dans laquelle l'élément de recouvrement (40) libère l'ouverture (16),
et un mécanisme de transmission (30) qui entraîne le chariot (20) par un moyen d'entraînement externe entre la position de repos (A) et la position de service (B) de telle manière que l'élément de recouvrement (40) effectue, entre la position de fermeture (C) et la position d'ouverture (D), au moins une première phase de mouvement (I) et une deuxième phase de mouvement (II), l'élément de recouvrement (40) étant mobile de manière sensiblement linéaire dans la première phase de mouvement (I) et de manière sensiblement pivotante dans la deuxième phase de mouvement (II).

2. Dispositif (100) selon la revendication 1,
**caractérisé en ce**
**que** le chariot (20) présente une ouverture de montage côté boîtier (24) pour recevoir la caméra (50) de manière interchangeable et/ou une ouverture de réception (25) tournée vers l'extérieur à travers laquelle la caméra (50) est dirigée vers l'extérieur, et **en ce que**, en particulier, le chariot (20) présente un adaptateur (26) pour la caméra (50).

3. Dispositif (100) selon l'une des revendications 1 ou 2,
**caractérisé en ce**
**que** le mécanisme de transmission (30) présente un élément pivotant (31) qui peut être amené à pivoter par le moyen d'entraînement, en particulier l'élément pivotant (31) étant en prise dans un guide d'entraînement (23) sur le chariot (20) pour mettre en mouvement le chariot (20).

4. Dispositif (100) selon l'une des revendications précédentes,
**caractérisé en ce**
**que** le guide d'entraînement (23) est réalisé avec une forme incurvée telle qu'elle permet de convertir un mouvement de pivotement de l'élément pivotant (31) en un mouvement linéaire du chariot (20).

5. Dispositif (100) selon l'une des revendications précédentes,
**caractérisé en ce**
**que** le boîtier (10) présente un rail de guidage supérieur et/ou inférieur (15a, 15b) pour stabiliser le mouvement du chariot (20),
et/ou que le boîtier (10) présente une première coque de boîtier (10a) et une deuxième coque de boîtier (10b), en particulier le chariot (20) et le mécanisme de transmission (30) pouvant être montés dans ou sur la première coque de boîtier (10a), et, de préférence, la deuxième coque de boîtier (10b) pouvant être fixée, en particulier de manière amovible, sur la première coque de boîtier (10a) par emboîtement et/ou à force.

6. Dispositif (100) selon l'une des revendications précédentes,
**caractérisé en ce**
**que** le premier guide (11a) et le deuxième guide (12a) sont formés sur la première coque de boîtier (10a) et un premier guide complémentaire (11b) et un deuxième guide complémentaire (12b) sont formés sur la deuxième coque de boîtier (10b).

7. Dispositif (100) selon l'une des revendications précédentes,
**caractérisé en ce**
**que** le chariot (20) présente un premier élément coulissant (21) qui coopère avec le premier guide (11a, 11b, 15a, 15b, 17) pour guider le chariot (20), en particulier l'élément de recouvrement (40) étant monté de manière rotative sur le premier élément coulissant (21) autour d'un axe (22) qui s'étend en particulier à travers l'élément coulissant (21).

8. Dispositif (100) selon l'une des revendications précédentes,
**caractérisé en ce**
**que** le premier guide (11a, 11b, 15a, 15b, 17) est conçu comme un guide linéaire pour déplacer linéairement le chariot (20) entre la position de repos (A) et la position de service (B).

9. Dispositif (100) selon l'une des revendications précédentes,
**caractérisé en ce**
**que** l'élément de recouvrement (40) présente au moins un deuxième élément coulissant (42a, 42b), qui coopère avec le deuxième guide (12a, 12b) pour guider l'élément de recouvrement (40).

10. Dispositif (100) selon l'une des revendications précédentes,
**caractérisé en ce**
**que** le deuxième guide (12a, 12b) présente une première partie (13a, 13b) pour déplacer linéairement l'élément de recouvrement (40) à proximité de la position de fermeture (C) et une deuxième partie (14a, 14b) pour faire pivoter l'élément de recouvrement (40) à proximité de la position d'ouverture (C).

11. Dispositif (100) selon l'une des revendications précédentes,
**caractérisé en ce**
**que** le mécanisme de transmission (30) est conçu de telle sorte que la première phase de mouvement (I) et la deuxième phase de mouvement (II) soient réalisées séquentiellement, en particulier que la première phase de mouvement (I) et la deuxième phase de mouvement (II) aient lieu au moins partiellement simultanément.

12. Dispositif (100) selon l'une des revendications précédentes,
**caractérisé en ce**
**qu'**il est prévu une membrane de protection qui ferme de manière étanche l'espace libre entre l'ouverture (16) et le chariot (20) pour empêcher la pénétration de particules de saleté et d'humidité dans le boîtier (10), la membrane de protection (15) étant en particulier formée d'un matériau élastique.

13. Dispositif (100) selon l'une des revendications précédentes,
**caractérisé en ce**
**que** l'ouverture (16) présente un élément formant collerette (18) sur lequel repose l'élément de recouvrement (40) lorsque le chariot (20) est dans la position de repos (A), l'élément formant collerette étant en particulier formé d'un matériau élastique.

14. Dispositif (100) selon l'une des revendications précédentes,
**caractérisé en ce**
**que** l'élément formant collerette (18) agit comme un amortisseur et/ou sert de joint d'étanchéité lorsque l'élément de recouvrement (40) est appliqué.

15. Procédé d'actionnement d'un dispositif (100) selon l'une des revendications précédentes, destiné à recevoir une caméra (50) qui sert en particulier d'aide au stationnement d'un véhicule automobile, comprenant un boîtier (10) dans lequel sont reçus de manière mobile un chariot (20) pour fixer de manière interchangeable la caméra (50) et un élément de recouvrement (40) pour fermer une ouverture (16) dans le boîtier (10) à travers laquelle la caméra (50) est dirigée vers l'extérieur,
le chariot (20) étant déplacé linéairement entre une position de repos (A) dans laquelle la caméra (50) est inactive et une position de service (B) dans laquelle des images peuvent être acquises de manière active par la caméra (50),
**caractérisé en ce que**
l'élément de recouvrement (40) est déplacé en partie de manière linéaire et en partie de manière pivotante d'une position de fermeture (C) dans laquelle l'élément de recouvrement (40) recouvre l'ouverture (16) dans une position d'ouverture (D) dans laquelle l'élément de recouvrement (40) libère l'ouverture (16), l'élément de recouvrement (40) étant déplacé de manière sensiblement linéaire dans la première phase de mouvement (I) et de manière sensiblement pivotante dans la deuxième phase de mouvement (II).
